# EUROPEAN PATENT APPLICATION

(11) **EP 2 076 085 A2**
(43) Date of publication of application: **01.07.2009**
(21) Application number: 08172024.5
(22) Date of filing: 17.12.2008
(51) Int. Cl.: H04W 72/04

(54) **Radio communication system and apparatus**

(30) Priority: 28.12.2007 JP 2007338949
(71) Applicant: Fujitsu Ltd., Kawasaki-shi, Kanagawa 211-8588 (JP)
(72) Inventor: Obuchi, Kazuhisa, Kawasaki-shi, Kanagawa 211-8588 (JP); Kawasaki, Yoshihiro, Kawasaki-shi, Kanagawa 211-8588 (JP); Tajima, Yoshiharu, Kawasaki-shi, Kanagawa 211-8588 (JP); Ohta, Yoshiaki, Kawasaki-shi, Kanagawa 211-8588 (JP); Tanaka, Yoshinori, Kawasaki-shi, Kanagawa 211-8588 (JP); Sugiyama, Katsumasa, Kawasaki-shi, Kanagawa 211-8588 (JP)
(74) Representative: Holtby, Christopher Lawrence

(57) **Abstract**

A radio communication system in which a first radio communication apparatus selects a transmission format from among a plurality of transmission formats to transmit data according to a selected transmission format and a second radio communication apparatus receives the data transmitted from the first radio communication apparatus. The first radio communication apparatus including a control signal generator to generate a control signal for notifying the second radio communication apparatus of a change of a trend of a transmission format to be applied and a radio transmitter to transmit the generated control signal. The second radio communication apparatus including a receiving processor which switches a candidate of receiving formats used for finding a receiving format to obtain a normal reception result based on the control signal.

## Description

### CROSS-REFERENCE TO RELATED APPLICATIONS

This application is based upon and claims the benefit of priority of the prior Japanese Patent Application No. 2007-338949, filed on December 28, 2007, the entire contents of which are incorporated herein by reference.

### FIELD

Certain aspects of the present invention discussed herein are related to a radio communication apparatus, which conducts radio communication, and control thereof.

### BACKGROUND

There are known radio communication methods for specifying a transmission format at each time of transmitting data. The High Speed Downlink Packet Access (HSDPA) technique that is introduced in the Wide-band Code Division Multiple Access (WCDMA) communication technique is given as an example (3GPP TS25.212).

In the HSDPA, a base station, as an example of a radio communication apparatus, notifies a mobile station, as another example of a radio communication apparatus, of the transmission format through a High Speed-Shared Control Channel (HS-SCCH) each time when packet data is transmitted by a High Speed-Physical Downlink Shared Channel (HS-PDSCH) before the packet data is transmitted.

The transmission format includes, for example, a modulation format (scheme) applied in a radio transceiver, a coding (encoding) rate applied for transmission data, and a spreading code used for transmission.

Since the mobile station is notified through the control channel of the transmission format before the packet data is transmitted, and determines an applied transmission format at each time, and receives the packet data in accordance with a reception format corresponding to the determined transmission format.

As described above, the radio communication apparatus on a transmitting side notifies the transmission format each time before the data is transmitted. This allows the radio communication apparatus on a receiving side to receive the data by the reception format corresponding to the notified transmission format and to smoothly perform receive processing.

However, notification of the transmission format at each time may cause another problem that radio traffic is increased.

There is an idea in which receive processing is tried for everypossible reception format (a limited number of transmission formats) in order to find a reception format by which a normal reception result is obtained(so-called bind detection processing).

According to the idea, it may be allowed that no transmission format is notified.

However, even though it is possible to control the traffic for notification of the transmission format, more trials of performing the receive processing may cause a problem that the receive processing requires more time or the like.

### SUMMARY

Accordingly, it is desirable to make it possible to efficiently perform the receive processing.

According to an aspect of the invention, a radio communication system includes a first radio communication apparatus which selects any of a plurality of transmission formats to transmit data according to the selected transmission format and a second radio communication apparatus that receives the data transmitted from the first radio communication apparatus. In the radio communication apparatus, the first radio communication apparatus includes a control signal generator that generates a control signal for notifying the second radio communication apparatus of a change of a trend of a transmission format to be applied and a radio transmitter that transmits the generated control signal. The second radio communication apparatus includes a receiving processor that switches a candidate of receiving formats used for finding a receiving format to obtain a normal reception result based on the control signal.

According to an aspect of the invention, a radio communication apparatus is capable of switching from a first mode for transmitting data by selecting from among any of a plurality of transmission formats belonging to a first group to a second mode for transmitting data by selecting from among any of a plurality of transmission formats belonging to a second group. The radio communication apparatus includes a generator that generates a control signal for notifying another radio communication apparatus as a communication opponent of changing of a mode and a transmitter that transmits the control signal when the radio communication apparatus switches modes.

Preferably, the control signal includes identification information of the second group.

Preferably, the control signal includes information for specifying any of the transmission formats belonging to the second group.

Preferably, the control signal includes the information for specifying any of the transmission formats belonging to the second group and any of the transmission formats belonging to the first group.

Preferably, when the generator does not receive reception information about data transmitted by the transmission format specified by the control signal or when the generator receives negative reception result information, the generator generates a control signal that includes any of the transmission formats belonging to the second group. The transmitter transmits the generated control signal to the other radio communication apparatus.

Preferably, the control signal includes a transmission format that belongs to the second group and does not belong to the first group.

Preferably, the data to be transmitted first according to switching to the second mode is transmitted according to the transmission format specified by the control signal of the plurality of transmission formats belonging to the second group.

Preferably, in the first mode or the second mode, at least a data is transmitted without transmitting notification which indicates which transmission format is applied when transmitting the data.

Preferably, when switching the second mode to the first mode, the generator generates a control signal for notifying the other communication apparatus of a transmission format that belongs to the first group and does not belong to the second group, and the transmitter transmits the generated control signal.

Preferably, the first mode corresponds to a speech mode, and the secondmode correspondstonon-speechmode, respectively.

Preferably, the first mode and the second mode have different transmission intervals, respectively.

Preferably, the transmission formats belonging to the first group have the same transmission intervals.

According to an aspect of the invention, a radio communication apparatus which receives data from another radio communication apparatus capable of switching from a first mode for transmitting data by selecting from among any of transmission formats belonging to a first group to a second mode for transmitting data by selecting from among any of transmission formats belonging to a second group. The radio communication apparatus includes a receiving processor that receives notification when mode switching is conducted from the first mode to the second mode, and switches a plurality of reception formats for making a trial receiving process according to the reception of the notification from among reception formats corresponding to the transmission formats belonging to the first group to reception formats corresponding to the transmission formats belonging to the second group.

Preferably, the notification has any of the transmission formats belonging to the second group, and the receiving processor performs the receiving processing according to the notified transmission format.

Preferably, in a mode for making a trial receiving process on a plurality of reception formats corresponding to the transmission formats belonging to the first group, if a transmission format that does not belong to any group is notified before the notification is received, the mode for making a trial of the receiving process on the plurality of reception formats corresponding to the transmission format belonging to the first group is kept.

Preferably, in the mode for making a trial receiving process on the plurality of reception formats corresponding to the transmission format belonging to the first group, if the data is transmitted when no transmission format is notified before the notification is received, the mode for making a trial receiving process on the plurality of reception formats corresponding to the transmission format belonging to the first group is kept.

Preferably, in a mode for making a trial receiving process on the plurality of reception formats corresponding to the transmission formats belonging to the first group, if a specific signal is received before the notification is received, the trial receiving process for a plurality of reception formats and for obtaining reception data based on the trying is prohibited during a certain time.

The advantages of the invention may be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWINGS

FIG.1 illustrates a flow of mode switching control;
FIG.2 illustrates an example of an embodiment of mode switching;
FIG. 3 illustrates a configuration example of a base station 1 as an example of a radio communication apparatus;
FIG.4 illustrates a configuration example of a frame used for downlink transmission;
FIG.5 illustrates a configuration example of a mobile station 2 as an example of another radio communication apparatus;
FIG. 6 illustrates a flow of processing in the base station 1; and
FIG.7 illustrates a flow of processing in the mobile station 2.

### DETAILED DESCRIPTION OF THE PREFERRED EMBODIMENTS

Description will be made below of embodiments of the present invention.

In this embodiment, a change of the candidates of transmission format used for the transmission may be different (bias of a transmission format) is notified to a receiving side when the applied transmission format has bias. This makes it possible to reduce candidates of reception formats for making a trial of receiving process on the receiving side. For example, if transmission format candidate group is changed from group A to group B, the bias of a transmission format is changed due to a difference of transmission formats between group A and group B. Thus the change of the bias of the transmission format is notified to the receiving side.

For example, in a radio communication system that includes a first radio communication apparatus selecting any of a plurality of transmission formats and then transmits data according to the selected transmission format, and a second radio communication apparatus that receives the data transmitted from the first radio communication apparatus, the first radio communication apparatus transmits a control signal for notifying a change of a trend of the transmission format to be applied, and the second radio communication apparatus switches the candidates of reception format for trying to perform the receiving process based on the control signal.

The change of the trend of the transmission format may be a change from a speech mode to a non-speech mode. Furthermore, transmission intervals of speech data in a speech mode and non-speech mode may be different, and the candidates of transmission format used for the transmission may be different (bias).

As a typical example of a case where a change of the applied transmission format occurs, description will be made of a Voice over IP (VoIP) by which speech data is transmitted as a packet (including IP packet). Furthermore, as an example of a radio communication system dealing with such data, description will be made of Long Term Evolution (LTE). In the LTE, a base station and a mobile station are used as examples of the radio communication apparatus.

Note that the LTE may be replaced by another radio communication system based on a principle understood according to the embodiment.

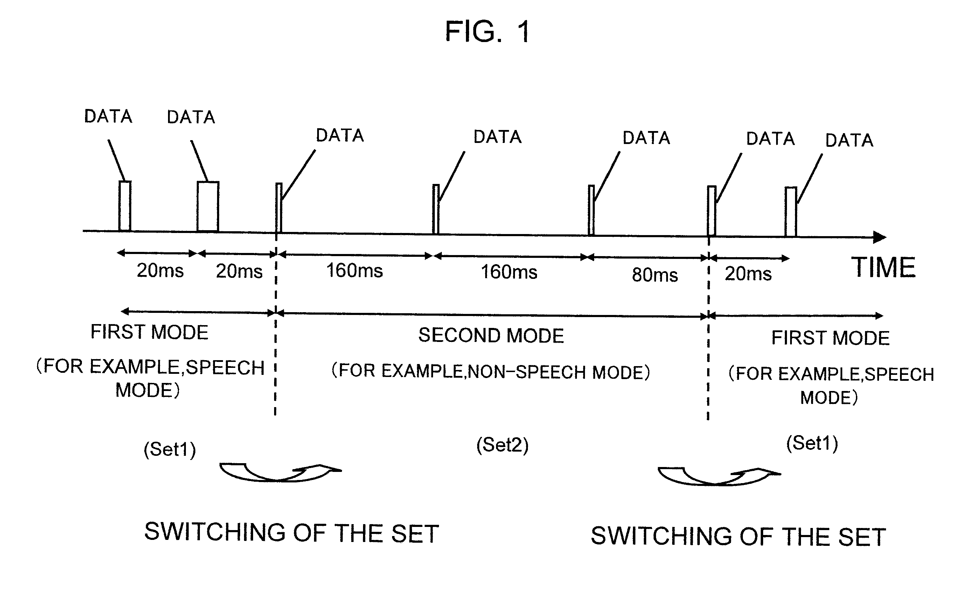

FIG.1 is an example of a flow of mode switching control according to the present embodiment.

Speech packet data (speech packet) may be given as an example of the data transmitted to the mobile station from the base station by radio communication. When the mobile station performs speech (voice) communication with another communication apparatus, the speech packet data is transmitted to the mobile station from the base station, and then, conversely, the speech packet data is transmitted to the base station from the mobile station.

In FIG.1, a horizontal axis indicates a time direction, and □ indicates a transmission timing of the packet data transmitted to the mobile station from the base station.

The transmitted packets include a packet having speech data (speech packet) and a packet having background noise (backgroundnoisepacket) . Mainly, a speech packet is transmitted from the base station to a mobile station while the other person (another mobile station side) is speaking as a speech mode, and the background noise packet is transmitted from the base station to the mobile station while the other person (the other mobile station side) keeps silent as a non-speech (silent) mode. The speech packet and the background packet are appropriately generated by an encoding device (vocoder) performing speech (voice) encoding.

The data transmitted in each mode have different characteristics. For example, in the speech mode, the speech packet is transmitted in a relatively short interval of 20 ms to transmit the speech data of the other person. In the silent section, the background speech packet is transmitted in a relatively long interval of 160 ms to transmit the background noise data.

Accordingly, a transmission format group (a plurality of transmission formats) that is applicable between speech mode and a transmission format group (a plurality of transmission formats) thatisapplicablebetweennon-speechmode (silentmode) are different. Such as a modulation method used for radio transmission of a packet (such as QPSK and 16QAM), an encoding rate (such as R=1/2 and 1/3) of encoding processing performed on transmission data, and a radio resource (for example, frequency) used for radio transmission of a packet are given as an example of the transmission format.

At the transmission in each mode, to use an applicable transmission format, it is efficient to select a transmission format from the transmission format group in the speech mode and the non-speech (silent) mode. It is possible to identify whether the packet is a speech packet or a background noise packet according to the content of the packet. However, it is also possible for a speech encoding device to set an identification bit anywhere in the packet, and then output the packet.

Here, the transmission formats included in the transmission format group applicable between the speech mode are T1A to T1C (a first set (group)), and the transmission formats included in the transmission format group applicable between the non-speech mode are T2A and T2B (a second set (group)). The first set (the first group) and the second set (the second group) are different, but they may have an overlapping transmission format, or may not have an overlapping transmission format (completely different transmission format). In this case, the first set and the second set do not include an overlapping transmission format.

Therefore, the trend of the applied transmission format changes in the speech mode and the non-speech mode. If the base station does not notify the mobile station of the transmission format at the time of transmitting the data, the mobile station has an enormous amount of receive processing to be performed because all of the reception formats corresponding to the transmission formats T1A to T1C included in the first set (the first set: R1A to R1C) and the reception formats corresponding to the transmission formats T2A and T2B (the second set: R2A and R2B) are all candidates of transmission format to be applied.

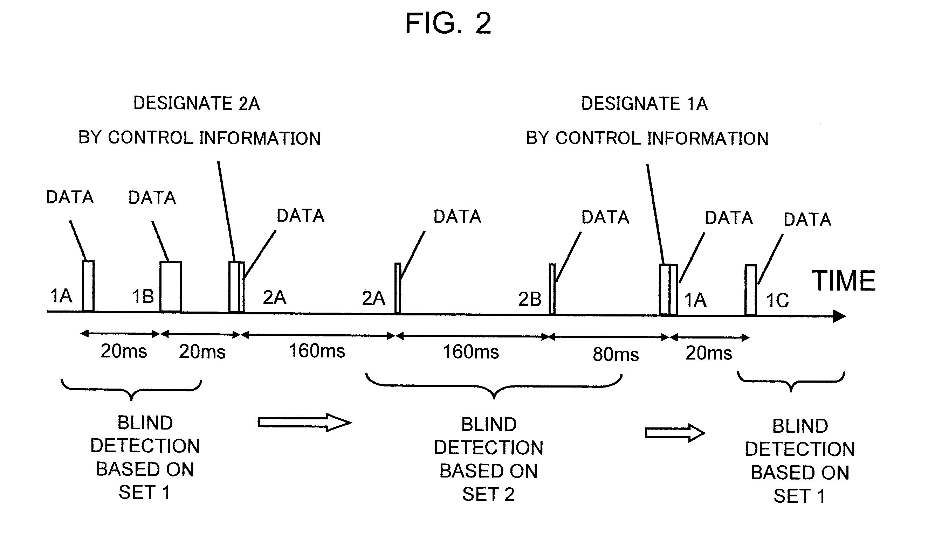

Thus, in the present embodiment, as shown in FIG.2, notification is performed (forexample, transmissionofacontrol signal is performed) to the mobile station from the base station according to mode switching.

For example, the mobile station starts communication with the base station by the transmission of a random access signal, and then starts speech (voice) communication using a packet by setting an uplink channel and a downlink channel.

At this time, the mobile station may receive a notification indicating that the packet is transmitted from the base station in a certain interval (for example, an interval of 20 ms). Furthermore, in this example, the notification indicating that the transmission is started in the speech mode is notified to the mobile station from the base station. At first, it is assumed that the base station selects the transmission format used for the transmission from among the transmission formats (T1A to T1C) included in the first set (the first group) . The transmission format applied by the base station and the mobile station respectively may be fixed to the first set or may be set at each time of the transmission as described above. As an initial value, a zero set that is not any of the sets may be set.

In this example, after starting communication, the mobile station makes a trial of the receiving process of the packet (the second set (R2A and R2B) is not used) among the transmission formats R1A to R1C corresponding to the transmission format included in the first set every 20 ms (performs blind detection). If a correct reception result is obtained using a trial transmission format, the mobile station presumes that the tried reception format is correct, and then performs reproduction (speech reproduction) or the like of the data obtained, as reception data, by using the reception format that is determined to be correct.

In the example of FIG.2, transmission formats 1A and 1B are the transmission formats (reception formats) presumed by the blind detection, and the base station does not directly notify the mobile station of the applied transmission formats 1A and 1B.

However, the packet transmitted next from the base station is a packet that includes the background noise because the speech mode is switched to the silent (non-speech) mode.

Therefore, the base station switches transmission formats by selecting the transmission formats included in the second set (T2A and T2B). At this time, the base station performs notification to the mobile station. The notification may be performed by transmitting, from the base station, a certain signal that may be detected by the mobile station.

For example, the certain signal may be identification information of the second set. To identify the first set or the second set, the identification information may be expressed by one bit. For example, if it is "0", the base station specifies the first set. If it is "1", the base station specifies the second set. Then the mobile station may perform the receiving process using the reception format belonging to the specified set.

The certain signal may be information for specifying a given transmission format (reception format) belonging to the second set. For example, of all the transmission formats included in the first set or the second set, the information may be at least the information for specifying any of the transmission formats. For example, it is possible to specify each of the transmission formats T1A to T1C, T2A, and T2B by using 001, 010, 011, 100, 101, and 110.

When, only identification of the second set is used by the certain signal and it is unknown which specific transmission format is applied of the transmission formats belonging to the second set, the mobile station, based on the certain signal for specifying the notified second set, switches the mode from the blind detection based on the first set to blind detection based on the second set. That is, the mobile station makes a trial of the receiving process using the reception formats R2A and R2B, and then uses the data obtained by the receiving process by the reception format by which a correct reception result is obtained to reproduce speech.

In the example of FIG.2, since it is notified that the transmission format is T2A by the certain signal (control signal), the mobile station may perform correct receiving process by performing the receiving process using the reception format R2A corresponding to the notified transmission format T2A. That is, the receive processing does not have to be performed using the other candidate R2B. At this time, the base station transmits the data by using the transmission format T2A.

By receiving the certain signal (control signal), it is assumed that the mode is changed, and the mobile station performs the blind detection by switching from the first set to the second set.

After that, the base station does not particularly perform the notification of the transmission format for a while (sporadic notification may be allowed), and then transmits the packet that includes the background noise by the transmission format selected from the second set.

If the first set and the second set include an overlapping transmission format, the mobile station may perform the following operation.

When the mobile station performs blind detection based on the first set, it is assumed that the transmission format included in both the first set and the second set is specified by the certain signal from the base station.

Here, the mobile station determines that the certain signal is transmitted from the base station because of mode switching, and then the mobile station may switch from the receiving process by blind detection based on the first set to the receiving process by blind detection based on the second set.

In this case, if the base station does not perform mode switching, the base station basically does not transmit the certain signal so that the mobile station does not detect mode switching unintentionally.

In FIG. 2, the sixth packet is a speech packet, and switching from the silent (non-speech) mode to the speech mode occurs.

Therefore, the base station transmits the transmission format T1A of the first set to the mobile station by the certain signal (control signal) and transmits the speech packet according to the transmission format T1A.

The mobile station performs the receiving process using the reception format R1A corresponding to the notified transmission format T1A to obtain and reproduce the speech packet. The mobile station does not have to make a trial of the receiving process using the reception formats R1B and R1C corresponding to the other transmission formats T1B and T1C.

After that, unless mode switching is performed in the silent section, the base station again selects the transmission format from the first set. The mobile station performs blind detection using the reception formats R1A to R1C corresponding to the transmission format included in the first set. For example, see Data 1C.

By transmitting the certain signal from the base station as described above, it is possible to reduce the receiving process workload of the mobile station. This makes it possible to efficiently perform the receiving process.

Next, description will be made of a configuration of a base station 1 as an example of a radio communication apparatus that is applicable to perform such processing. "Configuration of the base station 1 as an example of the radio communication apparatus"

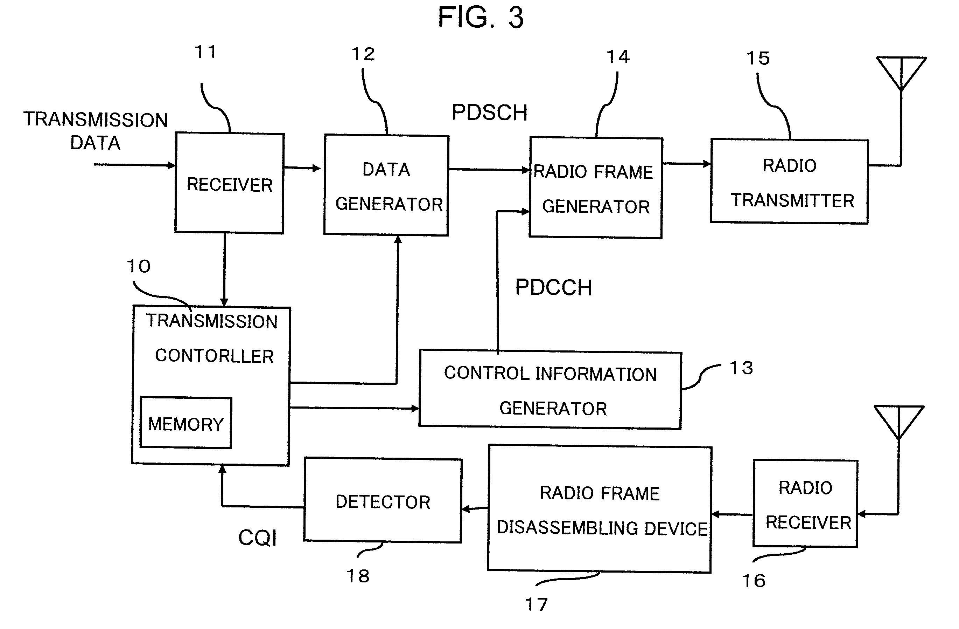

FIG.3 is a configuration example of base station 1 as an example of a radio communication apparatus. In this case, the radio communication apparatus is assumed to be a base station corresponding to the LTE. However, a radio communication apparatus corresponding to other systems is applicable.

In FIG. 3, numeral 10 indicates a transmission controller. The transmission controller 10 controls each unit and performs transmit processing. The transmit processing may reference a Channel Quality Indicator (CQI) given from a detector 18. The CQI is measurement result information of reception quality by a mobile station 2 on a signal transmitted by the base station 1 (such as pilot signal). The transmission controller 10 obtains reception result information of packet data transmitted from the mobile station (an ACK (reception result indicating that the packet data is successfully received) and a NACK (reception result indicating that the packet data is not successfully received)). Furthermore, the transmission controller may obtain, from a detector 18, other control information or the like transmitted from the mobile station. That is, received radio signals are input to the radio receiver 16 and demodulated. The demodulated signals are input to a radio frame disassembling device 17. The disassembling device disassembles a radio frame into information including control information. The detector detects control information from the disassembled frame information and gives the detected control information to transmission controller 10.

When the transmission data from a node (for example, a node connected to the same or another base station) connected to the base station 1 is received by a receiver 11, the transmission controller (scheduler) 10 performs scheduling for transmitting the data in order to perform transmission control according to the scheduling. The transmission data includes a speech packet or the like. The transmission controller 10 performs the transmission control to transmit a packet every 20 ms in the speech mode, and every 160 ms in the silent (non-speech) mode.

At this time, the transmission controller 10 refers to the CQI information received from the mobile station 2 as a destination to which data is to be transmitted, to select the transmission format. However, the transmission controller 10 selects the transmission format from among the transmission formats (T1A to T1C) in the speech mode, and selects the transmission format from among the transmission formats (T2A and T2B) in the silent mode. At the selection, if the CQI indicates that a radio environment is relatively better (good), a faster transmission format maybe selected from the transmission formats T1A to T1C. If the CQI indicates that the radio environment is relatively worse (bad), a slower transmission format may be selected from the transmission formats T1A to T1C.

The transmission controller 10 instructs a control information generator 13 to generate a control signal if necessary, and then controls a data generator 12 to output the transmission data. For example, in FIG.2, at the transmission of a first, second, fourth, fifth, and seventh packet, the transmission controller 10 does not instruct the control signal generator 13 to perform generating processing of the control signal for notifying a transmission format of a packet. However, at the transmission of the third packet and the sixth packet, the packet to be transmitted is switched to a packet corresponding to the silent mode from the packet corresponding to the speech mode, or is switched to a packet corresponding to the speech mode from the packet corresponding to the silent mode. Thus, the transmission controller 10 instructs the control information generator 13 to generate a certain signal (control signal). The example of the certain signal may be the one described above.

Since the receiver 11 transfers the received data to a data generator 12, the data generator 12 gives the data to be transmitted to a radio frame generator 14 according to the scheduling by the transmission controller 10.

The radio frame generator 14 multiplies the transmission data (the data transmitted through a Physical Downlink Shared Channel (PDSCH)) given from the data generator 12 with the control information (the data transmitted through a Physical Downlink Control Channel (PDCCH)) from the control information generator 13 to form a radio frame, and then makes a radio transmitter 15 transmit the data as a radio signal through the antenna. In the LTE, since OFDMA is used for transmission in a down direction, a processor that generates an Orthogonal Frequency Division Multiple Access (OFDMA) signal is included in the radio transmitter 15.

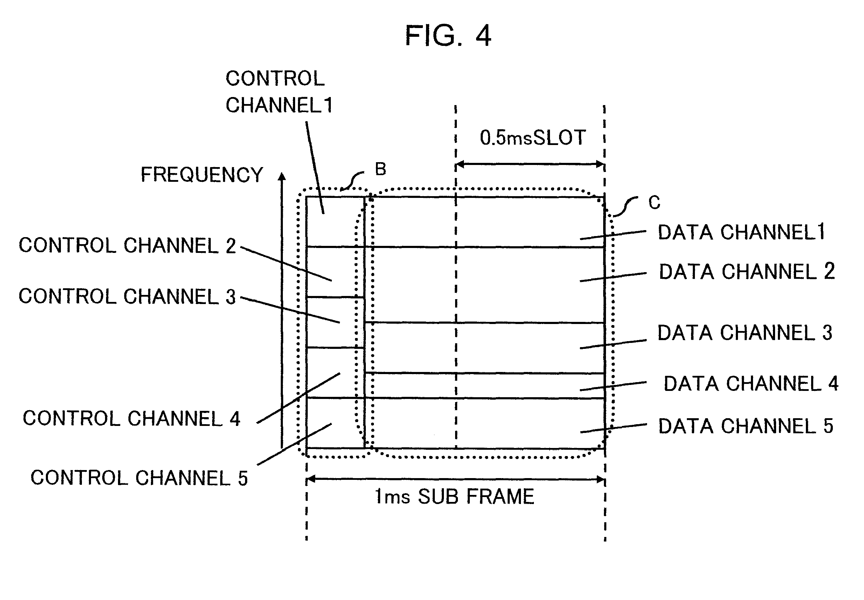

FIG.4 is a configuration example of a frame used for downlink.

In FIG.4, a longitudinal direction indicates frequency, and a horizontal direction indicates time. FIG.4 illustrates one sub-frame (1 ms) obtained by dividing a radio frame of 20 ms into 20 sub-frames. As shown in FIG. 4, the sub-frame includes two 0.5 ms slots.

The area surrounded by a dotted line B is an area (for one to three symbols from the head of the slot) where a control signal is stored. The area surround by a dotted line C (remaining part) is an area where data (such as packet data) is transmitted.

The control channel may include a certain signal (such as information of a transmission format). An example of the transmission format may include a demodulation method, an encoding rate, and a transmission area (such as transmission frequency).

If the certain signal is not transmitted, the area surrounded by the dotted line B may be narrowed to increase the transmission area of the data.

When the control information is transmitted through the control channel, the control information includes, for example, ID information of the mobile station 2. This allows the mobile station 2 to determine whether or not there is control information addressed to itself in the area surrounded by the dotted line B. Furthermore, it is possible to notify the mobile station of which region (resource) and which demodulation method are used to transmit the data by the transmission format included in the control information.

Next, description will be made of a configuration of the mobile station 2 as an example of a radio apparatus that is applicable to perform such process.

### "Configuration of the mobile station 2 as an example of the radio communication apparatus"

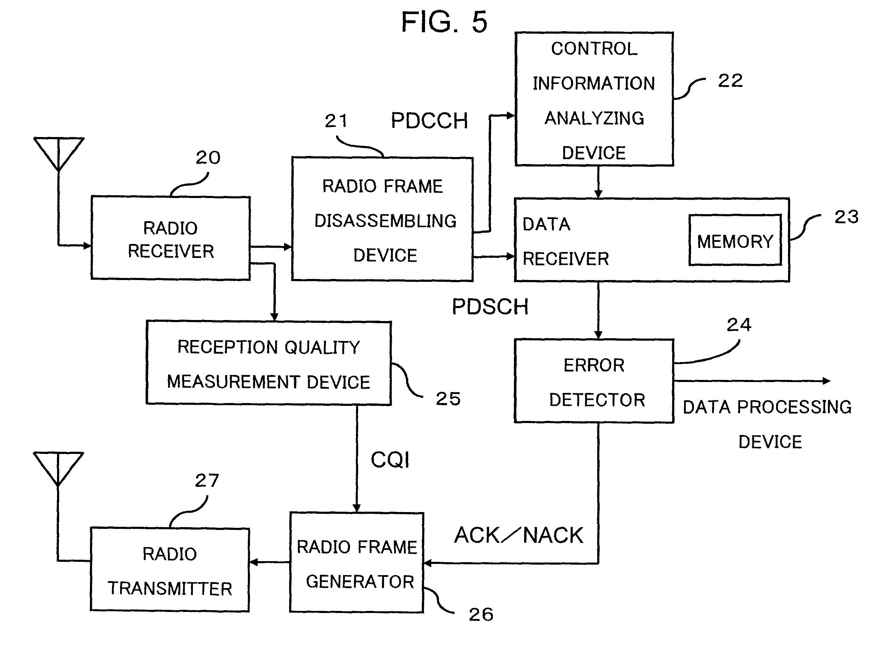

FIG.5 illustrates a configuration example of a mobile station 2 as an example of a radio communication apparatus. Here, the radio communication apparatus is assumed to be a mobile station corresponding to the LTE. However, a radio communication apparatus corresponding to other systems is applicable.

In FIG. 5, numeral 20 indicates a radio receiver. The radio receiver 20 performs the receiving process of the radio signal received from the base station 1. Numeral 21 indicates a radio frame disassembling device. The radio frame disassembling device 21 processes the reception signal received by the radio receiver 20 to detect data such as control data and packet data, and then gives the data to a control information analyzing device 22 and a data receiver 23, respectively.

If the input reception data includes control information, the control information analyzing device 22 detects the control information, and then notifies the data receiver 23 of the detected control information. It may be determined whether or not the control information addressed to the mobile station 2 is included in the input reception data by determining whether or not the ID of the mobile station 2 is included in the control information.

For example, if the information for specifying the first set and the second set is included in the control information or the information for specifying the transmission format itself is included in the control information, the information is given to the data receiver 23.

If the information provided to the data receiver 23 is, for example, information for specifying the second set, the data receiver 23 notifies the radio receiver 20 and the radio frame disassembling device 21 to perform the receiving process using the reception format corresponding to the reception formats R2A and R2B corresponding to the transmission formats T2A and T2B included in the second set. Then the data receiver 23 itself performs the receiving process using the reception format corresponding to the reception formats R2A and R2B. The data receiver 23 detects the mode switching by this notification, and then makes a trial of the receiving process (blind detection) by using the plurality of formats (R2A and R2B in this case) included in the notified set.

If the data receiver 23 is notified, for example, that the transmission format is T2A, the data receiver 23 notifies the radio receiver 20 and the radio frame disassembling device 21 to perform the receiving process using the reception format corresponding to the reception format R2A corresponding to the transmission format T2A. The data receiver 23 itself performs the receiving process using the reception format corresponding to the reception format R2A. By this notification, the data receiver 23 detects the mode switching. After that, the data receiver 23 performs the receiving process (performs the blind detection) by using the plurality of reception formats R2A and R2B corresponding to the transmission formats T2A and T2B included in the second set to which the notified T2A belongs.

Then the data receiver 23 gives a result of the receiving process performed by each reception format to an error detector 24, and then the error detector 24 determines whether or not there is an error. The determination of an error may be performed in the order of trying to perform the receiving process.

The error detector 24 estimates which format is correct of the applied reception formats by using an error detection bit (for example, a CRC bit) or the like added to the data. It is assumed that the reception format without errors is a correct reception format, and then the error detector 24 gives the corresponding receiving process result to the data processing device. In general, if the receiving process is performed by an incorrect reception format, it is considered that there is a low possibility that the reception result is correct.

The data processing device performs speech reproduction processing or the like (decoding and reproduction processing by the vocoder) based on the data (for example, speech data and background speech data) given from the error detector 24.

If the control information analyzing device 22 does not detect that the certain signal addressed to the mobile station 2 is included, the receiving process is performed according to the reception format corresponding to the transmission format included in the set (the first set or the second set) in the side that has been applied until then.

The signal received and processed by the radio receiver 20 is given to a reception quality measurement device 25. The reception quality measurement device 25 measures, for example, a reception Signal-to-Interference Ratio (SIR), a Signal-to-Interference and Noise power Ratio (SINR), a reception level or the like, and then outputs the measurement result as a CQI.

The CQI may be the data showing the measured reception quality itself. Furthermore, the data corresponding to each reception quality provided in advance may be transmitted.

Numeral 26 indicates a radio frame generator. The radio frame generator 26 transmits, through an up control channel, CQI information from the reception quality measurement device 25 or reception result information (ACK/NACK) determined by the error detector 24. Here, the NACKmay be generated and transmitted when no reception data without errors is obtained even though all the reception formats included in the object set (the first set or the second set) are applied by the blind detection.

When there is data to be transmitted to the base station 1, the data may be transmitted through an uplink data channel.

The transmission data generated by the radio frame generator 26 is processed by a radio transmitter 27 and then is transmitted from an antenna as radio signals. In the LTE, since a Single Carrier Frequency Division Multiple Access (SC-FDMA) method is employed for the radio transmission in an up direction, the radio transmitter 27 includes a processing unit that generates a radio signal corresponding to the SC-FDMA method.

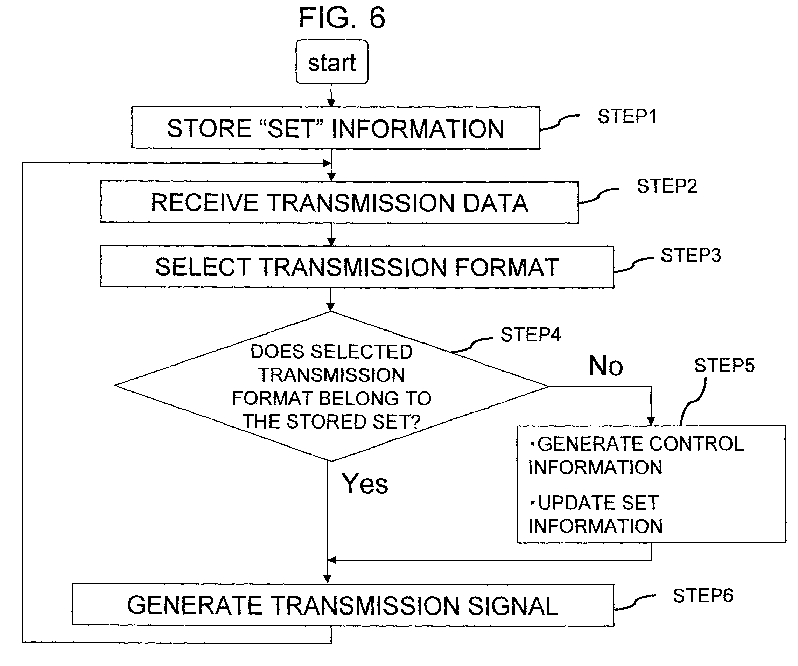

Next, by using FIG.6, description will be made of a flow of processing in the base station 1.

### "Flow of processing in the base station 1"

FIG.6 is a diagram describing a flow example of the processing in the base station 1.

First, in step 1, the transmission controller 10 stores the transmission format to be applied by selecting either the first set or the second set in association with the mobile station 2. As an initial value, the set may be a zero set by synchronizing with the mobile station 2.

The stored first set and second set may be notified to the mobile station 2 in advance by communication between upper layers.

In step 2, the receiver 11 receives the transmission data. In step 3, when the data is transmitted, the transmission controller 10 sets a transmission parameter. At this time, if the data corresponds to the speech packet transmitted in the speech mode, the transmission format is selected from the transmission formats included in the first set (T1A to T1C). If the data corresponds to the speech packet transmitted in the silent section, the transmission format is selected from the transmission formats included in the second set (T2A and T2B) . At the selection, the transmission parameter may be selected based on the CQI (or other information) notified by the mobile station 2.

In step 4, the transmission controller 10 determines whether or not the selected transmission format corresponds to the set stored in step 1.

If the transmission format selected in step 3 is a transmission format selected from the set stored in step 1, the determination is YES. Thus, the process goes to step 6, and a transmission signal is transmitted by the selected transmission format. At this time, the control signal for notifying the transmission format to the mobile station 2 does not have to be generated and transmitted.

Meanwhile, if the transmission format selected in step 3 is not a transmission format selected from the set stored in step 1 (the case of the zero set is included), the determination is NO. Thus, the process goes to step 5, and the transmission controller 10 instructs the control information generator 13 to generate the certain signal (control signal), and performs processing to change the information of the set stored in step 1. For example, to apply the transmission format selected from the second set this time when the first set is stored, the stored first set is updated to the second set. Furthermore, set storage may be performed by storing the set in a storing unit such as a memory provided in the transmission controller 10.

After the set is updated, the transmission controller 10 makes the radio transmitter 15 transmit the data (packet) using the selected transmission format, as well as the certain signal.

The certain signal maybe transmitted, for example, through a control channel 2 of FIG. 4. The packet data may be transmitted through a data channel 2. The control channel 2 includes the transmission format of the packet data transmitted through the data channel 2 or the applied set information.

In a further embodiment the base station 1 may perform set update more carefully.

The base station 1 transmits the packet data as well as the certain signal. However, as for the packet data, if the base station 1 does not receive the reception result (either ACK or NACK) from the mobile station 2, the set is not updated and may remain at the original state. If the mobile station 2 detects the certain signal, the mobile station 2 is supposed to transmit at least either an ACK or NACK reception result. If the reception result is not be detected by the base station 1, it is assumed that the mobile station 2 failed to detect the certain signal. In this case, at the time of transmitting the next packet, the base station 1 transmits, to the mobile station, the transmission format to be applied or the set information (identification information of the first set or the second set) that includes the transmission format to be applied. As for the packet data, this may be continued until a reception result (either ACK or NACK) is received from the mobile station 2. It is apparent that the reception may be repeated a given number of times to be finished.

The base station 1 transmits the packet data as well as the certain signal. As for the packet data, if the negative reception result (NACK) is received from the mobile station 2, the base station does not update the set and may remain with the original state. The mobile station transmits the NACK, which means that the mobile station 2 could not receive the data properly. Thus, the mobile station 2 may not properly receive the certain signal. In this case, at the time of transmitting the next packet, the base station 1 transmits, to the mobile station 2, the transmission format to be applied or the set information that includes the transmission format to be applied (the identification information of the first set or the second set). This may be continued until a positive reception result (ACK) is received from the mobile station 2. It is apparent this may be finished by repeating the reception the certain number of times.

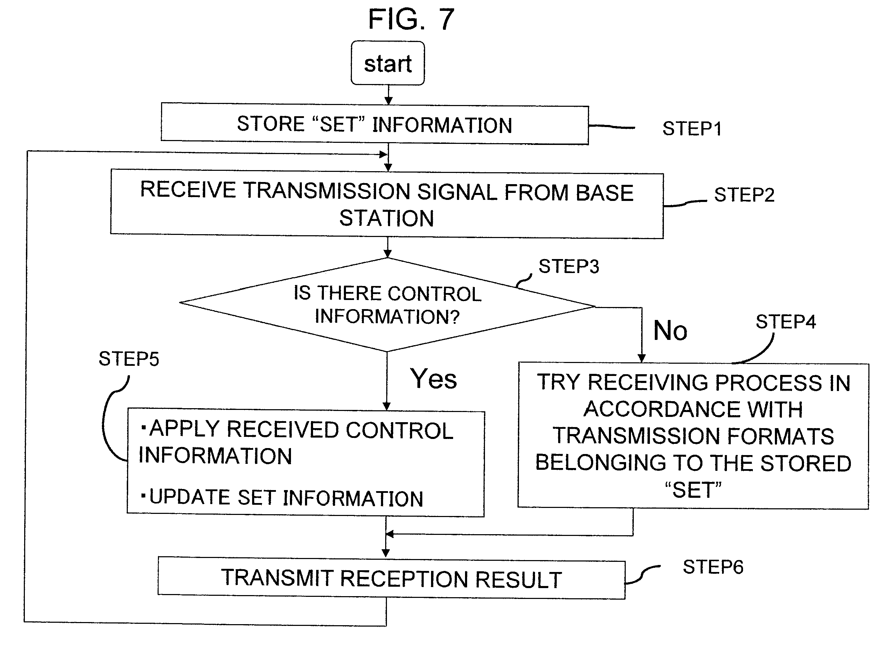

Next, by using FIG.7, description will be made of a flow of processing in the mobile station 2.

### "Flow of processing in the mobile station 2"

FIG.7 describes a flow example of the processing in the mobile station 2.

First, in step 1, the data receiver 23 stores the transmission format to be applied to select from either the first set or the second set. The stored first set and second set may be notified in advance from the base station 1 by communication between the upper layers. The zero set may be stored as a certain value.

In step 2, if the radio receiver 20 receives the signal transmitted from the base station, the control information analyzing device 22 determines whether or not the control information is included in the reception signal. For example, by using the mobile station's own identifier (ID) or the like, the control information analyzing device 22 determines whether or not the control signal addressed to itself is included in the area shown by a dotted frame B of FIG.4. If it is determined that the control signal is not included, the process goes to step 4. Then the receiving process is performed using each reception format corresponding to the transmission format included in the stored set.

Then the error detector 24 performs error detection processing or the like for the result of each receiving process. If no error is detected, an ACK is given to the radio frame generator 26 and is transmitted (step 6), and the data in which no error is detected is given to the data processing device and is reproduced. If an error is detected on all the trials of the reception formats, a NACK is given to the radio frame generator 26 and is transmitted (step 6).

If it is determined that the control information is included in step 3, the process goes to step 5.

That is, the control information analyzed by the control information analyzing device 22 is notified to the data receiver 23 by the transmission format (set information (the first set or the second set)) applied by the base station 1.

The data receiver 23 instructs the radio receiver 20 and the radio frame disassembling device 21 to perform the receiving process using the receiving format according to the notified transmission format, and controls to make the data receiver 23 itself perform the receiving process in accordance with the reception format. The stored set is updated by the set corresponding to the notified set. For example, if the second set is notified (the transmission format included in the second set is notified) in the case the first set is stored, the stored first set is updated to the second set.

Then the mobile station 2 transmits the reception result to the base station 1 in step 6.

If the data receiver 23 detects the transmission format that does not belong to any of the sets (the first set and the second set in this case) in the control information addressed to itself, it is assumed that there is no mode change. Then the data receiver 23 holds the set that has been applied until then. The data receiver 23 makes a trial of the receiving process by the reception format corresponding to the stored set, and does not update the stored set. This is because the reception of the control information may be a failure.

Furthermore, when the transmission controller 10 of the base station 1 instructs the control information generator 13 to generate a specific signal, the control information generator 13 may transmit the specific signal by generating and giving the specific signal to the radio frame generator 14. At this time, a speech packet may be transmitted in the same frame.

In this case, the mobile station 2 receives the specific signal, and this is detected by the control information analyzing device 22. If the data receiver 23 detects that the specific signal is received from the control information analyzing device 22, the receiving process by the blind detection may be prohibited after that. The time to be prohibited may be a certain time T. For example, the receiving process for cell search or the like may be allowed, and a time required for cell search may be a time T.

Therefore, when the base station 1 wants to give a reception period for performing other receive processing such as cell search to the mobile station 2 performing the blind detection, such receive processing may be allowed with respect to the mobile station 2 by transmitting the specific signal.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment of the present inventions have been described in detail, it should be understood that the various changes, substitutions, and alterations could be made hereto without departing from the spirit and scope of the invention.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A radio communication system in which a first radio communication apparatus selects a transmission format from among a plurality of transmission formats to transmit data according to the selected transmission format and a second radio communication apparatus receives the data transmitted from the first radio communication apparatus, the radio communication system comprising:
the first radio communication apparatus including a control signal generator to generate a control signal for notifying the second radio communication apparatus of a change of a trend of a transmission format to be applied and a radio transmitter to transmit the generated control signal; and
the second radio communication apparatus including a receiving processor which switches a candidate of receiving formats used for finding a receiving format to obtain a normal reception result based on the control signal.

2. A radio communication apparatus capable of switching a first mode for transmitting data by selecting a transmission format from among a plurality of transmission formats belonging to a first group to a second mode for transmitting data by selecting a transmission format from among a plurality of transmission formats belonging to a second group, the radio communication apparatus comprising:
a generator configured to generate a control signal for notifying another radio communication apparatus as a communication opponent of a change of a mode between the first mode and the second mode; and
a transmitter configured to transmit the control signal when the radio communication apparatus switches modes.

3. The radio communication apparatus according to claim 2, wherein the control signal includes identification information of the second group.

4. The radio communication apparatus according to claim 2 or 3, wherein the control signal includes information for specifying any of the transmission formats belonging to the second group.

5. The radio communication apparatus according to any of claims 2 to 4, wherein the control signal includes information for specifying any of the transmission formats belonging to the second group and any of the transmission formats belonging to the first group.

6. The radio communication apparatus according to claim 4 or 5, wherein when the generator does not receive reception information about data transmitted using the transmission format specified by the control signal or when the generator receives negative reception result information, the generator generates a control signal that includes any of the transmission formats belonging to the second group and the transmitter transmits the generated control signal to the other radio communication apparatus.

7. The radio communication apparatus according to any of claims 2 to 4 or 6, wherein the control signal includes a transmission format that belongs to the second group and does not belong to the first group.

8. The radio communication apparatus according to any of claims 4 to 7, wherein the data to be transmitted first according to switching to the second mode is transmitted according to the transmission format, specified by the control signal, from among the plurality of transmission formats belonging to the second group.

9. The radio communication apparatus according to any of claims 2 to 8, wherein in the first mode or the second mode, at least one data is transmitted without transmitting notification which indicates which transmission format is applied when transmitting the data.

10. The radio communication apparatus according to claim 7, 8 or 9, wherein when switching the second mode to the first mode, the generator generates a control signal for notifying the other communication apparatus of a transmission format that belongs to the first group and does not belong to the second group, and the transmitter transmits the generated control signal.

11. The radio communication apparatus according to any of claims 2 to 10, wherein the first mode corresponds to a speech mode, and the second mode corresponds to non-speech mode, respectively.

12. The radio communication apparatus according to any of claims 2 to 11, wherein the first mode and the second mode have different transmission intervals, respectively.

13. The radio communication apparatus according to any of claims 2 to 12, wherein the transmission formats belonging to the first group have the same transmission intervals.

14. A radio communication apparatus which receives data from another radio communication apparatus capable of switching from a first mode for transmitting data by selecting from among any transmission format belonging to a first group to a second mode for transmitting data by selecting from among any transmission format belonging to a second group, the radio communication apparatus comprising:
a receiving processor configured to receive notification when a mode is switched from the first mode to the second mode, and switches a plurality of reception formats for making a trial receiving process according to a received notification, the switch from reception formats corresponding to the transmission formats belonging to the first group to reception formats corresponding to the transmission formats belonging to the second group.

15. The radio communication apparatus according to claim 14, wherein the notification has any of the transmission formats belonging to the second group, and the receiving processor performs the receiving process according to the notified transmission format.

16. The radio communication apparatus according to claim 14 or 15, wherein in a mode for making a trial receiving process on a plurality of reception formats corresponding to the transmission formats belonging to the first group, if a transmission format that does not belong to any group is notified before the notification is received, the mode for making a trial of the receiving process on the plurality of reception formats corresponding to transmission formats belonging to the first group is kept.

17. The radio communication apparatus according to claim 15, wherein in the mode for making a trial receiving process on the plurality of reception formats corresponding to the transmission format belonging to the first group, if the data is transmitted when no transmission format is notified before the notification is received, the mode for making a trial receiving process on the plurality of reception formats corresponding to the transmission format belonging to the first group is kept.

18. The radio communication apparatus according to any of claims 15 to 17, wherein in a mode for making a trial receiving process on the plurality of reception formats corresponding to the transmission formats belonging to the first group, if a specific signal is received before the notification is received, the trial receiving process for a plurality of reception formats and for obtaining reception data based on the trial is prohibited during a certain time.
